# EUROPÄISCHE PATENTSCHRIFT

(11) **EP 2 107 968 B1**
(45) Veröffentlichungstag und Bekanntmachung des Hinweises auf die Patenterteilung: **08.01.2014**
(21) Anmeldenummer: 07822348.4
(22) Anmeldetag: 08.11.2007
(51) Int. Cl.: B32B 27/00, B60R 21/215

(54) **THERMOPLASTISCHE FOLIE**
THERMOPLASTIC FILM
FILM THERMOPLASTIQUE

(30) Priorität: 10.01.2007 DE 102007002230
(43) Veröffentlichungstag der Anmeldung: 14.10.2009
(73) Patentinhaber: Benecke-Kaliko AG, 30419 Hannover (DE)
(72) Erfinder: BÜHRING, Jürgen, 30900 Wedemark (DE); MARQUARDT, Jürgen, 79104 Freiburg (DE)
(74) Vertreter: Finger, Karsten
(86) Internationale Anmeldenummer: PCT/EP2007/062044
(87) Internationale Veröffentlichungsnummer: WO 2008/083871

(56) Entgegenhaltungen:
- EP-A- 1 199 226
- EP-A- 1 538 175
- EP-A- 1 705 076
- WO-A-00/73369
- DE-A1- 10 229 962
- DE-U1- 29 511 172

## Beschreibung

Die Erfindung betrifft eine thermoplastische Folie, insbesondere für die Innenverkleidung von Kraftfahrzeugen, bestehend aus einer äußeren kompakten Deckschicht mit einer dreidimensional strukturierten Oberfläche und einer geschäumten Schicht entsprechend Anspruch 1 auf der Unterseite, wobei die Folie in einem formgebenden Verarbeitungsschritt auf einen der . Bauteilform entsprechenden Träger aufgebracht wird und dadurch ihre Bauteilform erhält, wobei die Folie auf ihrer rückwärtigen und dem Träger zugewandten Unterseite mit rückseitig eingebrachten Einschnitten oder Materialschwächungen, also mit Dickenreduzierungen versehen ist.

Thermoplastische Formteile, Formfolien oder - häute für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt. Solche Formteile bestehen üblicherweise aus einer mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Die Formteile oder Formfolien bestehen aus einer relativ harten Oberschicht hoher Dichte, nämlich der Deck- oder Dekorschicht, die mit der geprägten oder eingeformten Oberfläche versehen ist, und aus einer auf der Unterseite auflaminierten / aufgeklebten Schaumschicht niedriger Dichte als Unterschicht, die eine ansprechende Haptik, d.h. eine angenehm "weiche" Griffigkeit des Bezuges bereitstellt. Dabei ist die harte Oberschicht auch als "Kompaktfolie" bekannt.

Sowohl die Oberschicht als auch die Unterschicht der Formteile /Formfolien können dabei aus mehreren Lagen unterschiedlicher oder unterschiedlich eingestellter Materialien bestehen, also etwa aus Kunststoffen wie PVC (Polyvinylchlorid), PP (Polypropylen), TPO (Polyolefin) etc. oder einer Kombination aus solchen oder ähnlichen Materialien.

Im Stand der Technik sind zur Herstellung solcher Formhäute verschiedene Verfahren bekannt, zum Beispiel Walzverfahren zur Herstellung von "endlosen" Folienbahnen oder auch Verfahren zur Herstellung von werkzeugfallenden einzelnen Formhäuten.

Im Weiteren sind jedoch die Walzverfahren angesprochen, bei denen eine thermoplastische Folie durch ein Prägeverfahren, also etwa mit Hilfe einer Prägewalze mit einer Oberflächenstruktur versehen wird.

Für das nachfolgende Aufbringen eines solchen Formteiles bzw. einer solchen Formfolie auf einen Armaturenbrett-Träger oder auf ein vorgefertigtes, z.B. aus faserverstärkter Pappe hergestelltes Trägerteil für einen Seitentür-Einsatz, kennt man neben dem Tiefziehen eine Reihe weiterer Umformverfahren, wie etwa Drück- oder Pressverfahren, bei denen die Folie gegen Formen bzw. gegen die genannten Träger gepresst wird und ihre Bauteilform erhält.

Die EP 1538175 A1 offenbart hierzu eine Dekorfolie für z.B. Armaturenbretter, die als ein mehrlagiger Formkörper mit einer Oberfolie ausgebildet ist. Die Oberfolie enthält mindestens partiell vernetzte polymere Materialien, beispielsweise auf der Basis von Polyolefinen und ist mit einer geschäumten Unterfolie mit bestimmtem Gelgehalt und festgelegter Dichte versehen. Die Dekorfolie wird für die bei der Durchführung eines nachfolgenden Tiefziehprozesses erforderliche Narbstabilität mit Elektronenstrahlen behandelt, die die Folie bzw. den Formkörper weiter vernetzen und damit die notwendige Stabilität geben.

Eine solche Folie, d.h. ein solcher Formkörper besteht, wie oben bereits dargestellt, also aus einem Verbund von mehreren Schichten, wodurch die Oberfolie relativ stark vernetzt und auch die geschäumte Unterfolie ziemlich stabil ausgebildet ist. Der Einsatz einer solchen Folie als Abdeckung eines Trägers im Zusammenspiel mit den in heutigen Fahrzeugen serienmäßig vorhandenen Airbag-Auslösegeräten nur dann möglich, wenn die Folie, die ja z.B. das gesamte Armaturenbrett und damit auch den Auslösemechanismus/ den Airbag bedeckt, zum Aufreißen entlang einer Naht geschwächt wird. Diese Schwächung erfolgt beispielsweise durch eine Laserstrahlbehandlung, bei dem ein Laserstrahl einen Teil der Foliendicke verbrennt bzw. schneidet. Nachteilig dabei ist, dass im Allgemeinen die rückseitige und durch den Laserstrahl erzeugte Materialschwächung im Lauf der Zeit auch auf der Außenseite durch einen Material-Rückfall sichtbar wird.

Da im Bereich des Automobilinterieurs ein starker Trend zur Verbesserung der Qualitätsanmutung zu beobachten ist, sind solche Unregelmäßigkeiten in den sichtbaren Oberflächenbereichen immer weniger akzeptabel.

Der Erfindung lag also die Aufgabe zugrunde, eine thermoplastische Folie bereitzustellen, die bei niedrigem Materialverbrauch ohne Qualitätsverlust herstellbar ist, die insbesondere für Verformungsvorgänge, wie z.B. Tiefziehen geeignet ist, die eine hochwertigen Anmutung der Oberfläche besitzt und auch ohne umfangreiche Zusatzbearbeitung im Bereich von Airbag-Auslösern einsetzbar ist.

Gelöst wird diese Aufgabe durch die Merkmale des Hauptanspruchs. Weitere vorteilhafte Ausbildungen sind in den Unteransprüchen offenbart. Ebenso wird ein Innenverkleidungsteil mit einer solchen Folie offenbart.

Dabei weist die kompakte Deckschicht im Bereich der Einschnitte oder Materialschwächungen eine Restdicke mindestens 35 % der Dicke der nicht eingeschnittenen ungeschwächten Deckschicht auf. Bevorzugt und in Abhängigkeit von der Narbstruktur und Narbtiefe ist dort jedoch eine Mindestdicke von 0,25 mm einzuhalten, besonders bevorzugt eine Dicke von 0,35 mm. Gleichzeitig ist die geschäumte Schicht so ausgebildet, dass sie eine bei halber Schichtdicke, also in der Mitte der geschäumten Schicht gemessene Dichte aufweist, die zwischen 15 und 50 % der Dichte der kompakten Deckschicht liegt.

Der Einschnitt bzw. die Materialschwächung kann dabei in den genannten Bereichen durch Laserschneiden / Laserpunkten erfolgen, so dass die Folie ohne Probleme bei ausgelöstem Airbag-Generator aufreißt und ein Aufblasen des Airbag ermöglicht. Überraschenderweise zeigt sich hier, dass durch die erfindungsgemäße Ausbildung der Folie, insbesondere der Dichte der geschäumten Schicht, verhindert wird, dass die Schaumschicht beim Laserschneiden / Laserpunkten über die eingestellte Schnittbreite hinaus durch Wärmeeinwirkung kollabiert.

Durch eine solcherart gezielte Ausbildung der Schichten ergibt sich also insgesamt eine ebenso strukturstabile wie gleichmäßig nachgiebige Folie guter Anmutung und ohne sichtbaren Nahtrückfall im Material, die aufgrund ihres konstruktions- und materialbedingten Festigkeitsniveaus besonders geeignet für den Einsatz im Bereich von Airbag-Auslösegeräten ist.

Eine vorteilhafte Weiterbildung besteht darin, dass die nicht eingeschnittene ungeschwächte Deckschicht eine Dicke von 0,4 bis 0,8 mm und im Bereich der Einschnitte oder Materialschwächungen eine Restdicke von 0,25 mm aufweist, wie bereits erwähnt. Hierdurch ergibt sich eine besonders gute Einstellung der Folie auf einerseits eine für Verformungsverfahren / Tiefziehverfahren ausreichende Strukturfestigkeit. Bei entsprechenden Narbausbildungen ist eine Mindestdicke von 0,35 mm im Bereich der Materialschwächungen bevorzugt.

Eine weitere vorteilhafte Weiterbildung besteht darin, dass die geschäumte Schicht eine bei halber Schichtdicke der geschäumten Schicht gemessene Dichte aufweist, die zwischen 25 und 50 % der Dichte der kompakten Deckschicht liegt. Die so ausgebildete Dichte der geschäumten Schicht sorgt für einen angepassten und ausreichenden Wärmeabfluss im Material, so dass die durch den Laser erzeugten Kavernen im Material schmal bleiben.

Eine weitere vorteilhafte Weiterbildung besteht darin, dass die Deckschicht aus einem oder mehreren Materialen aus der Gruppe Polyolefin, Polyurethan, Polyvinylchlorid, teilkristallines Polymer, amorphes Polymer besteht. Diese Materialien eignen sich besonders gut für Anwendungen im Innenbereich von Kraftfahrzeugen und lassen sich mit den hier üblichen Herstellungsmethoden gut verarbeiten.

Die geschäumte Schicht besteht aus einem Polyolefinschaum und weist eine Polyethylenkomponente auf, deren Schmelzflussindex (MFI - Melt Flow Index / 2,16 Kg, 190° C) kleiner als 2 g / 10 min ist, wobei die geschäumte Schicht eine Polypropylenkomponente enthalten kann. Eine solche Ausbildung erleichtert die Verarbeitung und die Herstellung der Folien wodurch sich ein ausgewogenes Verhältnis zwischen Flexibilität des Materials und erforderlicher Struktur-Festigkeit für das Tiefziehen ergibt.

Eine weitere vorteilhafte Weiterbildung besteht darin, dass die geschäumte Schicht bei einer Eindrucktiefe von 25 % der Gesamtdicke der ungeschwächten geschäumten Schicht eine Stauchhärte von höchstens 250 KPa aufweist. Auch dies dient der Anpassung der Gebrauchseigenschaften bei Herstellung und in der Nutzung im Fahrzeug. Gleiches gilt für eine weitere vorteilhafte Weiterbildung, die darin besteht, dass die geschäumte Schicht eine Stauchhärte von höchstens 180 KPa, vorzugsweise höchstens 125 KPa aufweist.

In besonderer Weise wird die eingangs genannte Aufgabe auch gelöst durch ein Innenverkleidungsteil für ein Kraftfahrzeug, vorzugsweise Armaturenbrett, versehen mit einer erfindungsgemäß ausgebildeten thermoplastischen Folie, wobei die Folie in der Art ausgebildet und auf einem entsprechenden Träger aufgebracht ist, dass die rückseitig eingebrachten Einschnitte oder Materialschwächungen der Folie die Aufreißnähte einer Airbag-Abdeckung bilden.

Anhand eines Ausführungsbeispieles soll die Erfindung näher erläutert werden.

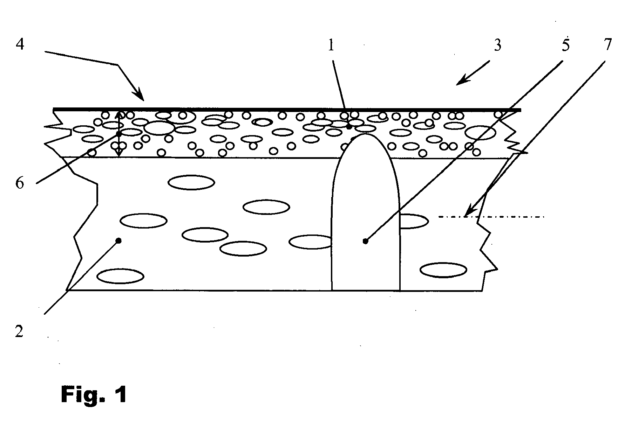

Die Fig. 1 zeigt den Aufbau einer mehrschichtigen aus einer Deckschicht 1 und einer geschäumten Schicht 2 bestehenden thermoplastischen Folie 3 für die Verkleidung eines Kfz-Armaturenbrettes im Bereich eines AirBag-Generators. Die thermoplastische Folie 3 ist mit einer geprägten dreidimensional strukturierten Oberfläche 4 auf ihrer äußeren Deckschicht versehen, also mit einer durch Walzprägung außen aufgeprägten Narbe.

Die Folie 3 weist durch die geschäumten Schicht 2 bis in die Deckfolie 1 reichende Einschnitte oder Materialschwächungen 5 auf. Dabei besitzt die Deckschicht im Bereich der Einschnitte oder Materialschwächungen eine Restdicke von hier 60 % der Dicke 6 der nicht eingeschnittenen ungeschwächten Deckschicht 1. Die geschäumte Schicht 2 weist eine bei halber Schichtdicke, also in der Mitte 7 der geschäumten Schicht gemessene Dichte auf, die 35 % der Dichte der kompakten Deckschicht 1 beträgt.

Die Dicke 6 der nicht eingeschnittenen ungeschwächten Deckschicht beträgt 0,6 mm.

### Bezugszeichenliste

### (Teil der Beschreibung)

- 1: Thermoplastische Folie
- 2: Geschäumte Schicht
- 3: Thermoplastische Folie
- 4: Dreidimensional strukturierten Oberfläche
- 5: Einschnitt
- 6: Dicke der Deckschicht
- 7: Mitte der geschäumten Schicht

## Patentansprüche

1. Thermoplastische Folie (3), insbesondere für die Innenverkleidung von Kraftfahrzeugen, bestehend aus einer äußeren kompakten Deckschicht mit einer dreidimensional strukturierten Oberfläche und einer geschäumten Schicht auf der Unterseite, wobei die Folie in einem formgebenden Verarbeitungsschritt auf einen der Bauteilform entsprechenden Träger aufgebracht wird und dadurch ihre Bauteilform erhält, wobei die Folie auf ihrer rückwärtigen und dem Träger zugewandten Unterseite mit rückseitig eingebrachten Einschnitten oder Materialschwächungen versehen ist, **dadurch gekennzeichnet, dass** die rückseitig eingebrachten Einschnitte oder Materialschwächungen durch die geschäumten Schicht bis in die Deckschicht (1) reichen und die Deckschicht (1) im Bereich der Einschnitte oder Materialschwächungen eine Restdicke von mindestens 35 % der Dicke (6) der nicht eingeschnittenen ungeschwächten Deckschicht (1) aufweist und dass die geschäumte Schicht (2) eine bei halber Schichtdicke (7) der geschäumten Schicht (2) gemessene Dichte aufweist, die zwischen 15 und 50 % der Dichte der kompakten Deckschicht liegt, wobei die geschäumte Schicht aus einem Polyolefinschaum besteht und eine Polyethylenkomponente aufweist, deren Schmelzflussindex (MFI - Melt Flow Index / 2,16 Kg, 190° C) kleiner als 2 g / 10 min ist.

2. Thermoplastische Folie nach Anspruch 1, **dadurch gekennzeichnet, dass** die nicht eingeschnittene ungeschwächte Deckschicht (1) eine Dicke (6) von 0,4 bis 0,8 mm und im Bereich der Einschnitte oder Materialschwächungen eine Restdicke von mindestens 0,25 mm aufweist.

3. Thermoplastische Folie nach Anspruch 2, **dadurch gekennzeichnet, dass** die nicht eingeschnittene ungeschwächte Deckschicht (1) im Bereich der Einschnitte oder Materialschwächungen eine Restdicke von mindestens 0,35 mm aufweist

4. Thermoplastische Folie nach Anspruch 1 bis 3, **dadurch gekennzeichnet, dass** die geschäumte Schicht (2) eine bei halber Schichtdicke (7) der geschäumten Schicht gemessene Dichte aufweist, die zwischen 25 und 50 % der Dichte der kompakten Deckschicht liegt.

5. Thermoplastische Folie nach Anspruch 1 bis 4, **dadurch gekennzeichnet, dass** die Deckschicht aus einem oder mehreren Materialen aus der Gruppe Polyolefin, Polyurethan, Polyvinylchlorid, teilkristallines Polymer, amorphes Polymer besteht.

6. Thermoplastische Folie nach Anspruch 5, **dadurch gekennzeichnet, dass** die geschäumte Schicht eine Polypropylenkomponente enthält.

7. Thermoplastische Folie nach Anspruch 1 bis 6, **dadurch gekennzeichnet, dass** die geschäumte Schicht bei einer Eindrucktiefe von 25 % der Gesamtdicke der ungeschwächten geschäumten Schicht eine Stauchhärte von höchstens 250 KPa aufweist.

8. Thermoplastische Folie nach Anspruch 7, **dadurch gekennzeichnet, dass** die geschäumte Schicht eine Stauchhärte von höchstens 180 KPa, vorzugsweise höchstens 125 KPa aufweist.

9. Innenverkleidungsteil für ein Kraftfahrzeug, vorzugsweise Armaturenbrett, versehen mit einer thermoplastischen Folie nach Anspruch 1 bis 9, wobei die rückseitig eingebrachten Einschnitte oder Materialschwächungen der Folie die Aufreißnähte einer Airbag-Abdeckung bilden.

## Claims

1. Thermoplastic film (3), especially for the interior paneling of motor vehicles, consisting of an outer compact top layer with a three-dimensionally structured surface and a foamed layer on the underside, said film being applied in a shaping processing step to a carrier corresponding to the component shape and thus receiving its component shape, said film being provided on its reverse underside facing toward the carrier with indentations or material weak points introduced on the reverse side, **characterized in that** the indentations or material weak points introduced on the reverse side extend through the foamed layer into the top layer (1) and the top layer (1) in the region of the indentations or material weak points has a residual thickness of at least 35% of the thickness (6) of the unindented unweakened top layer (1), and **in that** the foamed layer (2) has a density measured at half the layer thickness (7) of the foamed layer (2) which is between 15 and 50% of the density of the compact top layer, the foamed layer consisting of a polyolefin foam and having a polyethylene component whose melt flow index (MFI/2.16 kg, 190°C) is less than 2 g/10 min.

2. Thermoplastic film according to Claim 1, **characterized in that** the unindented unweakened top layer (1) has a thickness (6) of 0.4 to 0.8 mm and in the region of the indentations or material weak points has a residual thickness of at least 0.25 mm.

3. Thermoplastic film according to Claim 2, **characterized in that** the unindented unweakened top layer (1) in the region of the indentations or material weak points has a residual thickness of at least 0.35 mm.

4. Thermoplastic film according to Claims 1 to 3, **characterized in that** the foamed layer (2) has a density measured at half the layer thickness (7) of the foamed layer which is between 25 and 50% of the density of the compact top layer.

5. Thermoplastic film according to Claims 1 to 4, **characterized in that** the top layer consists of one or more materials from the group of polyolefin, polyurethane, polyvinyl chloride, partly crystalline polymer, amorphous polymer.

6. Thermoplastic film according to Claim 5, **characterized in that** the foamed layer comprises a polypropylene component.

7. Thermoplastic film according to Claims 1 to 6, **characterized in that** the foamed layer has a compressive stress of at most 250 kPa at an indentation depth of 25% of the total thickness of the unweakened foamed layer.

8. Thermoplastic film according to Claim 7, **characterized in that** the foamed layer has a compressive stress of at most 180 kPa, preferably at most 125 kPa.

9. Interior paneling part for a motor vehicle, preferably dashboard, provided with a thermoplastic film according to Claims 1 to 8, wherein the indentations or material weak points of the film introduced on the reverse side form the tear seams of an airbag cover.

## Revendications

1. Film thermoplastique (3), notamment pour l'habillage intérieur de véhicules automobiles, constitué d'une couche supérieure compacte extérieure à surface structurée tridimensionnellement et d'une couche moussée sur le côté inférieur, le film étant appliqué sur un support correspondant à la forme du composant lors d'une étape d'usinage façonnante et prenant ainsi la forme du composant, le film étant muni sur son côté inférieur arrière et orienté vers le support d'incisions ou d'affaiblissements du matériau réalisés sur le côté arrière, **caractérisé en ce que** les incisions ou affaiblissements du matériau réalisés sur le côté arrière traversent la couche moussée jusque dans la couche supérieure (1) et la couche supérieure (1) présente dans la zone des incisions ou affaiblissements du matériau une épaisseur résiduelle d'au moins 35 % de l'épaisseur (6) de la couche supérieure (1) non incisée et non affaiblie, et **en ce que** la couche moussée (2) présente une densité mesurée au milieu de l'épaisseur de couche (7) de la couche moussée (2) qui est comprise entre 15 et 50 % de la densité de la couche supérieure compacte, la couche moussée étant constituée d'une mousse de polyoléfine et comprenant un composant polyéthylène dont l'indice de fluidité (MFI, Melt Flow Index/2,16 kg, 190 °C) est inférieur à 2 g/10 min.

2. Film thermoplastique selon la revendication 1, **caractérisé en ce que** la couche supérieure (1) non incisée et non affaiblie présente une épaisseur (6) de 0,4 à 0,8 mm et, dans la zone des incisions ou affaiblissements du matériau, une épaisseur résiduelle d'au moins 0,25 mm.

3. Film thermoplastique selon la revendication 2, **caractérisé en ce que** la couche supérieure (1) non incisée et non affaiblie présente dans la zone des incisions ou affaiblissements du matériau une épaisseur résiduelle d'au moins 0,35 mm.

4. Film thermoplastique selon les revendications 1 à 3, **caractérisé en ce que** la couche moussée (2) présente une densité mesurée au milieu de l'épaisseur de couche (7) de la couche moussée qui est comprise entre 25 et 50 % de la densité de la couche supérieure compacte.

5. Film thermoplastique selon les revendications 1 à 4, **caractérisé en ce que** la couche supérieure est constituée d'un ou de plusieurs matériaux du groupe constitué par une polyoléfine, un polyuréthane, un polychlorure de vinyle, un polymère partiellement cristallin, un polymère amorphe.

6. Film thermoplastique selon la revendication 5, **caractérisé en ce que** la couche moussée contient un composant polypropylène.

7. Film thermoplastique selon les revendications 1 à 6, **caractérisé en ce que** la couche moussée présente à une profondeur d'indentation de 25 % de l'épaisseur totale de la couche moussée non affaiblie une résistance à la compression d'au plus 250 KPa.

8. Film thermoplastique selon la revendication 7, **caractérisé en ce que** la couche moussée présente une résistance à la compression d'au plus 180 KPa, de préférence d'au plus 125 KPa.

9. Partie d'habillage intérieur pour véhicule automobile, de préférence tableau de bord, munie d'un film thermoplastique selon les revendications 1 à 8, les incisions ou affaiblissements du matériau réalisés sur le côté arrière du film formant les joints d'ouverture d'un couvercle d'airbag.
